# EUROPEAN PATENT SPECIFICATION

(11) **EP 2 075 870 B1**
(45) Date of publication and mention of the grant of the patent: **04.08.2010**
(21) Application number: 08172224.1
(22) Date of filing: 19.12.2008
(51) Int. Cl.: H01M 10/44, H02J 7/00

(54) **Discharge control system**
Entladungssteuerungssystem
Système de commande de décharge

(30) Priority: 26.12.2007 JP 2007335117
(43) Date of publication of application: 01.07.2009
(73) Proprietor: Honda Motor Co., Ltd., Minato-ku Tokyo 107-8556 (JP)
(72) Inventor: Naganuma, Atsuhiro, Saitama 351-0193 (JP); Uchida, Shintaro, Saitama 351-0193 (JP)
(74) Representative: Rupp, Christian

(56) References cited:
- DE-A1- 10 121 760
- DE-A1-102004 006 022
- JP-A- 10 285 818
- JP-A- 2001 309 570
- JP-A- 2007 062 681

## Description

### FIELD OF THE INVENTION

The present disclosure relates to a discharge control system which implements an electric power supply to a load when cell voltages of electric rechargeable cells of an electric storage pack are in a uniform state.

### DESCRIPTION OF RELATED ART

An electric storage pack for supplying electric power to a motor or the like is equipped on a vehicle such as EV (Electric Vehicle) or HEV (Hybrid Electrical Vehicle). The electric storage pack includes a plurality of electric rechargeable cells which are connected in series.

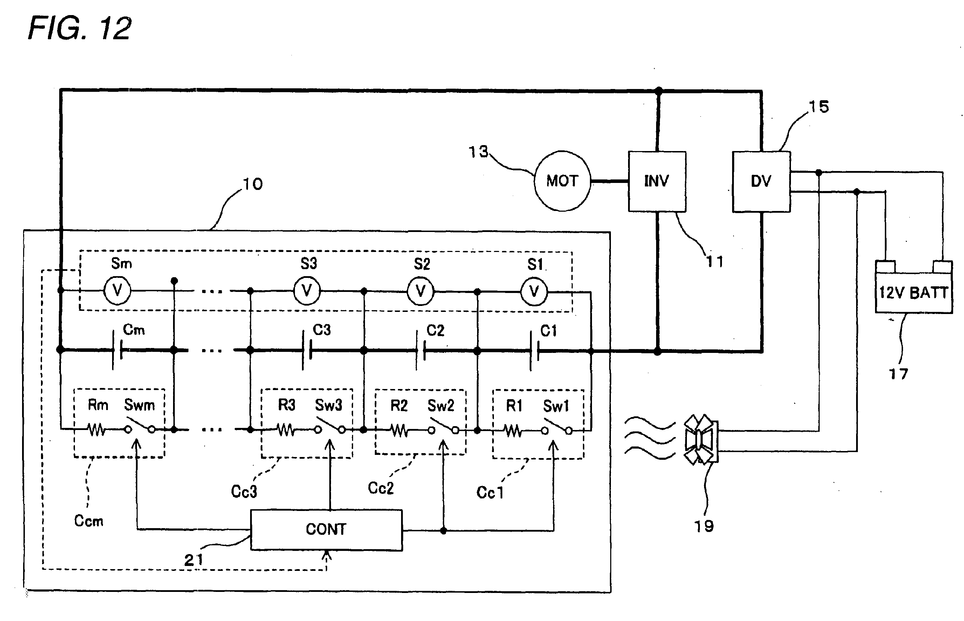

Fig. 12 is a block diagram showing a relationship between an electric storage pack, part of an electric drive system and auxiliaries which are equipped on a vehicle. The vehicle described in Fig. 12 includes a electric storage pack 10, an inverter 11, a motor 13, a DC-DC converter 15, a battery 17 and a cooling fan electric motor (hereinafter, referred to as an "electric motor") 19. An output voltage of the electric storage pack 10 is a high voltage (for example, 100 to 200V), and an output voltage of the battery 17 is an output voltage for auxiliaries (for example, a low voltage of 12V). The output voltage of the electric storage pack 10 is converted from direct current to alternating current by the inverter 11 so as to be supplied to the motor 13. The output voltage of the electric storage pack 10 is reduced low enough to charge the battery 17 by the DC-DC converter 15. The electric motor 19 is supplied with electric power by the battery 17, so as to drive a cooling fan to cool the electric storage pack 10 with air produced by the fan.

The electric storage pack 10 shown in Fig. 12 has a plurality of electric rechargeable cells (hereinafter, referred to simply as "cells") C1 to Cm (m is an integer which is 2 or larger) which are connected in series, discharge switch units Cc1 to Ccm which are connected to the respective cells in parallel, voltage detection units S1 to Sm which are connected to the respective cells in parallel, and a control unit 21 for controlling the respective discharge switch units. In addition, the discharge switch units Cc2 to Ccm, the voltage detection units S1 to Sm and the control unit 21 are integrated into an IC chip.

Each discharge switch unit has a discharge resistor R and a switch Sw which are connected in series. The voltage detection units S1 to Sm detect voltages at both ends of the cell (a cell voltage) with which it is connected in parallel. The control unit 21 on/off controls the respective switches of the discharge switch units in accordance with determination results by the voltage detection units S1 to Sm.

Further, the electric storage pack 10 has a charge control unit which is not shown. The charge control unit controls to prevent the overcharge of the respective cells (an overcharge preventive control) when the electric storage pack 10 is charged. The cell voltages of the respective cells vary depending on the state of using the electric storage pack 10 and/or qualities of the respective cells. Therefore, the charge control units implements an overcharge preventive control based on the cell having a highest cell voltage. In addition, lithium ion electric rechargeable cells or nickel-hydrogen electric rechargeable cells are used as the cells installed in the electric storage pack 10, and the overcharge preventive control is necessary particularly when the lithium ion electric rechargeable cells are used.

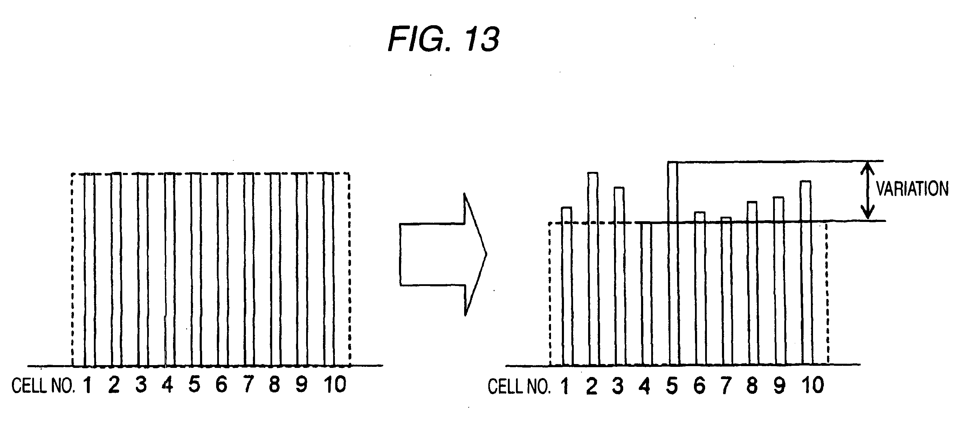

In this way, since the overcharge preventive control of the electric storage pack 10 is carried out based on the cell having the highest cell voltage, as shown in Fig. 13, when variation in cell voltage becomes large due to repetition of charging and discharging, the capacity of the electric storage pack 10 is reduced. Namely, since the whole residual capacity of the electric storage pack 10 is limited by the overcharge preventive control that is carried out when the electric storage pack 10 is charged, the capacity of the electric storage pack 10 is reduced as shown by dotted lines in Fig.13 as a result of the implementation of the overcharge preventive control. In the event that the capacity of the electric storage pack 10 is reduced, resulting in an insufficient supply of electric power to the motor 13, additional cells need to be installed in the electric storage pack 10 or the electric storage pack 10 needs to be replaced by a electric storage pack having a larger capacity.

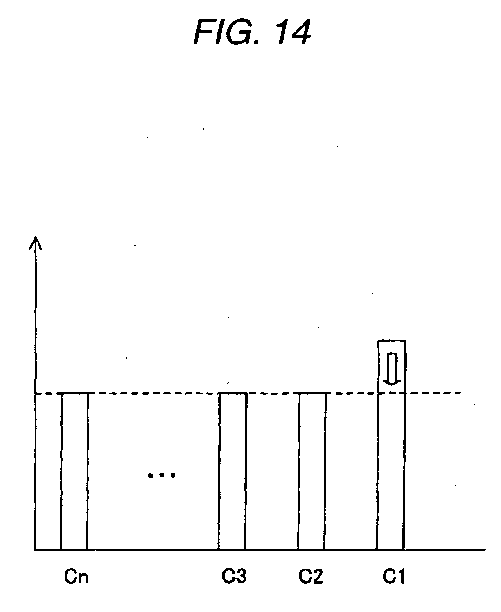

Therefore, in the electric storage pack 10 shown in Fig. 12, the control unit 21 controls individually the switches of the respective discharge switch units so that the cell voltages of the respective cells become the same in level. For example, as shown in Fig. 14, when the cell voltage of the cell C1 is higher than the cell voltages of the other cells C2 to Cm, the control unit 21 closes the switch Sw1 possessed by the discharge switch unit Cc1 which is associated with the cell C1 so as to close a circuit between the cell C1 and a discharge resistor R1. As this occurs, a current flows from the cell C1 to the discharge resistor R1, and the current is transformed into heat in the discharge resistor R1. As a result, the cell voltage of the cell C1 decreases, and when the cell voltage of the cell C1 goes down to the same level as the cell voltages of the cells C2 to Cm, the control unit 21 opens the switch Sw1. In this way, by making uniform the cell voltages of the respective cells so as to reduce the variation in cell voltage, the reduction in capacity of the electric storage pack can be prevented.

However, in the electric storage pack shown in Fig. 12, heat is produced in association with making uniform the cell voltages of the cells. Namely, in the electric storage pack 10, electric power stored in the cells is consumed wastefully by making uniform the cell voltages of the cells. Further, as has been described above, the integrated circuit made up of the discharge switch units Cc1 to Ccm, the voltage detection units S1 to Sm and the control unit 21 is provided in an interior of the electric storage pack 10. Since some constituent elements are included in the integrated circuit whose properties change depending on ambient temperatures, the discharge resistors R1 to Rm desirably have a smaller heat value.

According to Joule's law, the heat value of a resistor is proportional to "electric current² x resistance value." Therefore, resistors having a large resistance value are used for the discharge resistors R1 to Rm. Since the larger the resistance value of a discharge resistor, the smaller a discharge current, a quantity of heat generated in the discharge resistor is reduced. However, with a small discharge current, a longer time has to be spent in making uniform the cell voltages of the cells. Therefore, the resistance values of the discharge resistors R1 to Rm are determined based on a balance between the heat values of the discharge resistors and the time spent in making uniform the cell voltages. In any case, since heat is generated in the discharge resistors R1 to Rm in association with making uniform the cell voltages of the cells, a high-level of countermeasures against heat like heat dissipation or heat resistance need to be taken for the electric storage pack 10 so as to prevent the integrated circuit from being badly affected by the heat.

With a view to solving the problem, in an invention described in a specification of U.S. Patent Application (No. 12/256,717) which was filed in October 23, 2008 and which had not yet been laid open at the time of filing the subject patent application, as is shown in Fig. 15, electric power discharged from electric rechargeable cells of a electric storage pack 50 as a result of making uniform cell voltages of the electric rechargeable cells is used for driving a cooling fan electric motor 109. In this way, in the invention of the U.S. Patent Application, no heat is generated by a resistor shown in Fig. 12 and electric power discharged from the electric rechargeable cells is effectively used at the electric motor 109.

According to the invention of the cited U.S. patent application, no discharge from the electric rechargeable cells in the electric storage pack 50 is required when the cell voltages of the whole electric rechargeable cells of the electric storage pack 50 are uniform. Therefore, no electric power is supplied to the electric motor 109 as long as the cell voltages are so uniform. The electric motor 109 is necessary for driving the cooling fan for generating an air flow for cooling the electric storage pack 50. Cooling air needs to be sent into the electric storage pack 50 at all times while a vehicle equipped with the electric storage pack 50 continues running. Consequently, it is undesirable that no electric power is supplied to the electric motor 109 due to the cell voltages remaining uniform while the vehicle is running. It is desirable to have a configuration in which electric power can be supplied to the electric motor 109 while the cell voltages are held uniform.

In addition, in the invention of the cited U.S. patent application, the electric rechargeable cells are controlled in such a manner that the electric rechargeable cells having higher cell voltages are discharged for preference. If the discharge control of the cited invention is implemented even in the uniformed state, switching occur in a discharge switch unit 51 of the electric storage pack 50. Since the switch unit is formed as part of an integrated.circuit, a certain number of times of switching would pose no problem. However, when switching occurs frequently, in the event that switches SW1 to SW2n are made of CMOS, there may be caused a situation which a through current flows every time switching occurs. This may result in a case which frequent switching increases consumed electric power.

In this way, it is desirable to have the configuration in which even in such a state that the cell voltages of the whole electric rechargeable cells of the electric storage pack 50 are uniform. Electric power can be supplied to the electric motor 109 while preventing the occurrence of frequent switchings.
Reference JP Patent Publication No. 2001 309570 discloses a method of adjusting capacity of a battery pack for reducing a capacity difference by reducing voltage fluctuation of a single battery forming a battery pack. To reference proposes a solution consisting of measuring a voltage of each lithium ion battery under the condition where a switch is turned off at constant time. A time duration for turning ON the switch is calculated using, as a control parameter for proportional control and integral control, one or both of the voltage difference between the voltage across each lithium battery and the voltage across the average lithium battery forming a battery pack 1, or the voltage difference between the voltage across each lithium ion battery and the minimum voltage across the lithium ion battery among the lithium batteries forming the battery pack 1. The switch is turned ON during the relevant time duration. Voltage fluctuation of the lithium ion battery forming a battery pack is lowered more than that for simply controlling ON and OFF the switch, and capacitance adjusting accuracy may be raised.

### SUMMARY OF INVENTION

The invention provides a discharge control system which can implement an electric power supply to a load even in such a state that cell voltages of electric rechargeable cells of an electric storage pack are uniform.

According to a first aspect of the invention, a discharge control system for a electric storage pack (for example, a electric storage pack 100 in an embodiment) has a plurality of electric rechargeable cells (for example, lithium ion electric rechargeable cells C1 to Cn in the embodiment) connected in series, said system is provided with a plurality of cell voltage detection units (for example, voltage detection units S1 to Sn in the embodiment) which detect respective cell voltages of the electric rechargeable cells, a switch group (for example, a discharge switch unit 111 in the embodiment) including a plurality of switches (for example, switches SW1 to SW2n in the embodiment) which are respectively connected between the plurality of electric rechargeable cells and a control unit (for example, a control unit 121 in the embodiment) forming one discharge line of the discharge lines from at least any one of the electric rechargeable cells to a rotary inductive load or a load driving feeding circuit, wherein the control unit controls individually the switches of the switch group in accordance with detection results by the cell voltage detection units when a difference between a highest cell voltage and a lowest cell voltage in the electric rechargeable cells of the electric storage pack is equal to or smaller than a predetermined value.

According to a second aspect of the invention, wherein the electric rechargeable cells may comprise lithium ion electric rechargeable cells.

According to a third aspect of the invention, wherein the control unit may control individually the switches of the switch group such that the electric rechargeable cells of the electric storage pack are discharged sequentially cell by cell.

According to a fourth aspect of the invention, wherein the control unit may specify at least one of the plurality of the electric rechargeable cells having a larger cell voltage than an average cell voltage value of the electric rechargeable cells of the electric storage pack and may control individually the switches of the switch group such that the electric rechargeable cells are discharged sequentially cell by cell from the specified electric rechargeable cell.

According to a fifth aspect of the invention, wherein when elapsing a predetermined period of time since the start of a discharge from one electric rechargeable cell, the control unit may form a discharge line from a next electric rechargeable cell to the rotary inductive load or the load driving feeding circuit.

According to a sixth aspect of the invention, wherein when the cell voltage of one electric rechargeable cell drops by a predetermined voltage as a result of a discharge from the electric rechargeable cell, the control unit may form a discharge line from a next electric rechargeable cell to the rotary inductive load or the load driving feeding circuit.

According to a seventh aspect of the invention, wherein when the cell voltage of one electric rechargeable cell drops to be a predetermined voltage as a result of a discharge from the electric rechargeable cell, the control unit may form a discharge line from a next electric rechargeable cell to the rotary inductive load or the load driving feeding circuit.

According to an eighth aspect of the invention, wherein the control unit may divide the electric rechargeable cells of the electric storage pack into a plurality of groups each including the same number of electric rechargeable cells and may control individually the switches of the switch group such that the plurality of groups of electric rechargeable cells are discharged sequentially group by group.

According to a ninth aspect of the invention, wherein a plurality of adjacent electric rechargeable cells may be designated as forming each group.

According to a 10th aspect of the invention, wherein when elapsing a predetermined period of time since the start of a discharge from one group, the control unit may form a discharge line from a next group to the rotary inductive load or the load driving feeding circuit.

According to an 11th aspect of the invention, wherein when the cell voltage of each of the electric rechargeable cells designated as forming one group drops by a predetermined voltage as a result of a discharge from the group, the control unit may form a discharge line from a next group to the rotary inductive load or the load driving feeding circuit.

According to a 12th aspect of the invention, wherein the control unit may designate the one of the plurality of the electric rechargeable cells having the highest cell voltage in the plurality of electric rechargeable cells of the electric storage pack as forming a group and may form a discharge line from an electric rechargeable cell in the group to the rotary inductive load or the load driving feeding circuit.

According to a 13th aspect of the invention, wherein the control unit may select the electric rechargeable cell to be designated as forming the group such that a discharge voltage of the electric rechargeable cell falls within a voltage range which can drive the rotary inductive load or the load driving feeding circuit.

According to a 14th aspect of the invention, wherein the control unit may designate a plurality of adjacent electric rechargeable cells as forming the group.

According to a 15th aspect of the invention, wherein when designating the plurality of electric rechargeable cell as forming a group, the control unit may designate the electric rechargeable cells in the order of the electric rechargeable cell having a higher cell voltage.

According to a 16th aspect of the invention, wherein the control unit may implement a discharge from the electric rechargeable cells designated as forming the group to the rotary inductive load or the load driving feeding circuit until a difference between a lowest cell voltage in the electric rechargeable cells designated as forming the group and a highest cell voltage in the electric rechargeable cells of the electric storage pack exceeds the predetermined value.

According to a 17th aspect of the invention, wherein the switch group has a first switch group including a plurality of first switches (for example, the switches SW1 and SW2, SW4, ..., SW2n-2 in the embodiment) which are connected to a negative side input terminal of the rotary inductive load or the load driving feeding circuit and a second switch group including a plurality of second switches (for example, the switches SW3, SW5, . .1 ., SW2n-1 and SW2n) which are connected to a positive terminal of the rotary inductive load or the load driving feeding circuit, and wherein the control unit closes any one of first switches and any one of second switches so as to form discharge lines from the plurality of electric rechargeable cells to the rotary inductive load or the load driving feeding circuit.

According to the discharge control system set forth in the 1st, 2nd or 17th aspect of the invention, electric power can be supplied to the rotary inductive load or the load driving feeding circuit also when the cell voltages of the plurality of electric rechargeable cells of the electric storage pack are in the uniformed state (in a state where the difference between the highest cell voltage and the lowest cell voltage of the plurality of electric rechargeable cells is equal to or lower than the predetermined value).

According to the discharge control system set forth in any of the 3rd to the 16th aspects of the invention, even in such a state that the cell voltages are uniform, no frequent switching does not occur in the switch group.

Other aspects and advantages of the invention will be apparent from the following description, the drawings and the claims.

### BRIEF DESCRIPTION OF THE DRAWINGS

Fig. 1 is a block diagram showing a relationship between an electric storage pack according to a first embodiment, part of an electric drive system and auxiliaries which are equipped on a vehicle.
Fig. 2 is a circuit diagram showing an electric storage pack 100 of a first embodiment which has eight cells C1 to C8.
Fig. 3 is a diagram showing cell discharges to the electric storage pack shown in Fig. 2 and an on/off pattern of switches.
Fig. 4 is a diagram showing a relationship between a single cell's output voltage, the number of discharge cells, a maximum cell-voltage and a discharge voltage.
Figs. 5A to 5C are diagrams showing an example of cell voltages of cells which are installed in the electric storage pack 100 of the first embodiment.
Figs. 6A to 6C are diagrams showing an example of cell voltages of cells which are installed in an electric storage pack 100 of a second embodiment.
Figs. 7A to 7C are diagrams showing an example of cell voltages of cells which are installed in an electric storage pack 100 of a third embodiment.
Fig. 8 is a graph showing a load power efficiency relative to an application voltage of an electric motor 109.
Fig. 9 is a flowchart illustrating a group setting by a control unit 121 possessed by the electric storage pack 100 of the third embodiment.
Figs. 10A to 10C are diagrams showing an example of cell voltages of cells which are installed in an electric storage pack 100 of a fourth embodiment.
Fig. 11 is a flowchart illustrating a group setting by a control unit 121 possessed by the electric storage pack 100 of the fourth embodiment.
Fig. 12 is a block diagram showing a relationship between a electric storage pack, part of an electric drive system and auxiliaries which are mounted on a vehicle.
Figs. 13A and 13B are diagrams showing a variation in cell voltage of electric rechargeable cells installed in the electric storage pack 100 shown in Fig. 12.
Fig. 14 is a diagram showing an example of the cell voltages of the electric rechargeable cells installed in the electric storage pack 100 shown in Fig. 12.
Fig. 15 is a block diagram showing a relationship between an electric storage pack, part of an electric drive system and auxiliaries which are mounted on a vehicle described in a specification of Japanese Patent Publication No. 2007-62681.
Fig. 16 is a block diagram showing a relationship between the electric storage pack of the first embodiment, part of an electric drive system and auxiliaries in another form.

### DETAILED DESCRIPTION OF THE PREFERED EMBODIMENT

Hereinafter, embodiments of the invention will be described by reference to the drawings. An electric storage pack which will be described in the following embodiments is such as to be equipped on a vehicle such as EV (Electric Vehicle) and HEV (Hybrid Electric Vehicle) to supply electric power to a motor or the like. In addition, a plurality of electric rechargeable cells connected in series are provided in the electric storage pack. In the embodiments which will be described hereinafter, lithium ion electric rechargeable cells are used as such electric rechargeable cells. However, as other embodiments, nickel-hydrogen electric rechargeable cells, electric double-layer capacitors, capacitors and the like may be used. In addition, it should be understood that when used in this specification, "discharge" means not energy output for supplying electric power from the electric storage pack to the motor but energy output for making uniform cell voltages of the respective cells installed in the electric storage pack.

### (First Embodiment)

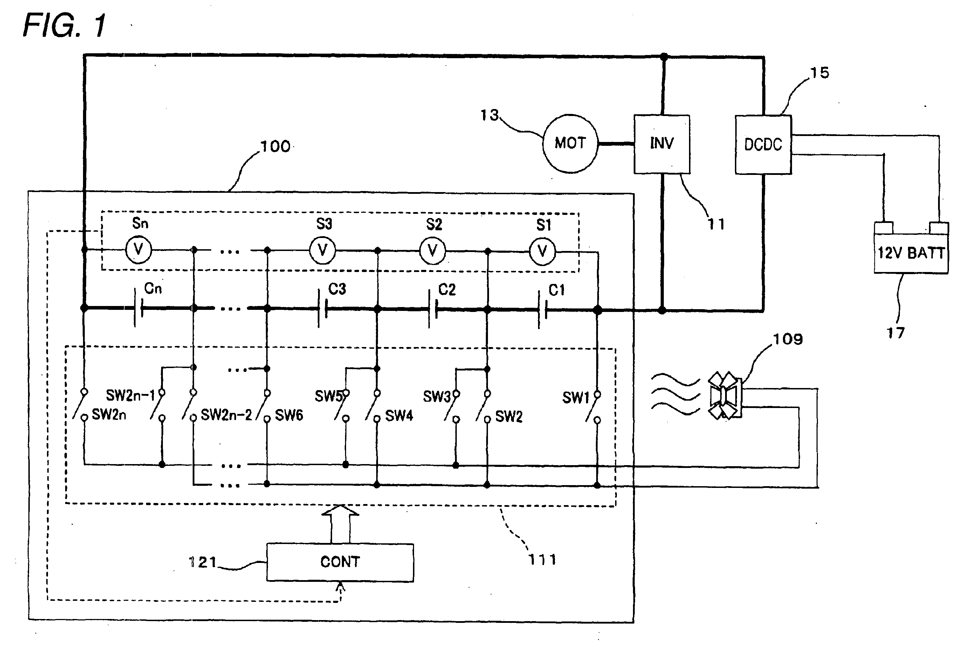

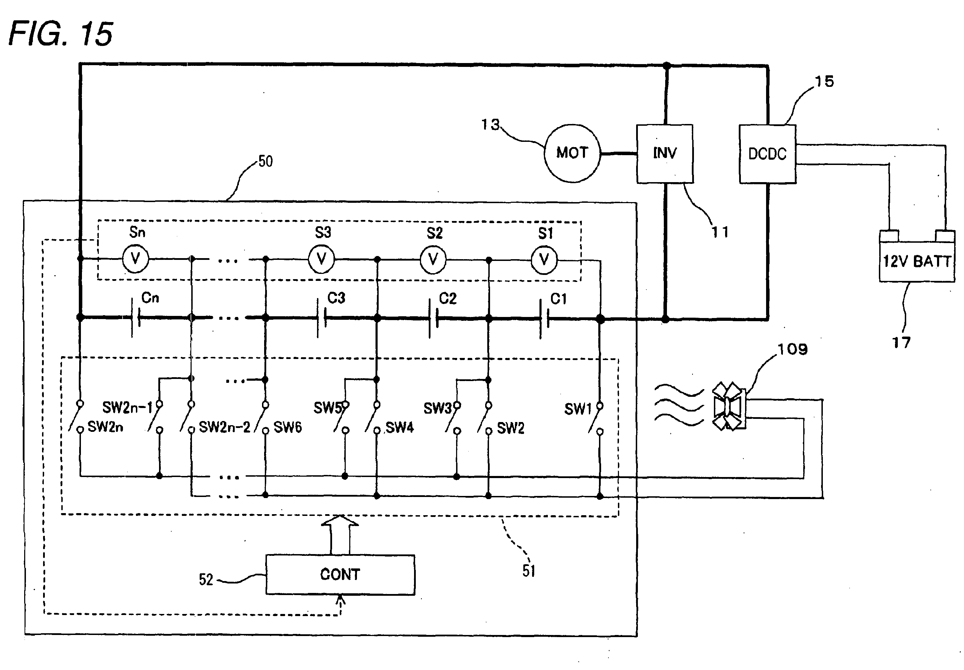

Fig. 1 is a block diagram showing a relationship between an electric storage pack according to a first embodiment, a part of an electric drive system and auxiliaries which are equipped on a vehicle. The vehicle described in Fig. 1 includes a electric storage pack 100 of the first embodiment, an inverter 11, a motor 13, a DC-DC converter 15, a battery 17, and a cooling fan electric motor (hereinafter, referred to as an "electric motor") 109 which is a rotary induction load. The inverter 11, the motor 13, the DC-DC converter 15 and the battery 17 are the same as those constituent elements shown in Figs. 12 to 15. In addition, the electric motor 109 is identical to the electric motor 109 shown in Fig. 15.

An output voltage of the electric storage pack 100 of this embodiment is a high output voltage (for example, 100 to 200V), and an output voltage of the battery 17 is an output voltage for auxiliaries (for example, a low voltage of 12V). The output voltage of the electric storage pack 100 is transformed from direct current to alternating current by the inverter 11 for supply to the motor 13. The output voltage of the electric storage pack 100 is reduced low enough to charge the battery 17 by the DC-DC converter 15. Electric power is supplied to the electric motor 109 by discharge from cells installed in the electric storage pack 100, and an airflow produced by the cooling fan driven by the electric motor 109 cools the electric storage pack 100.

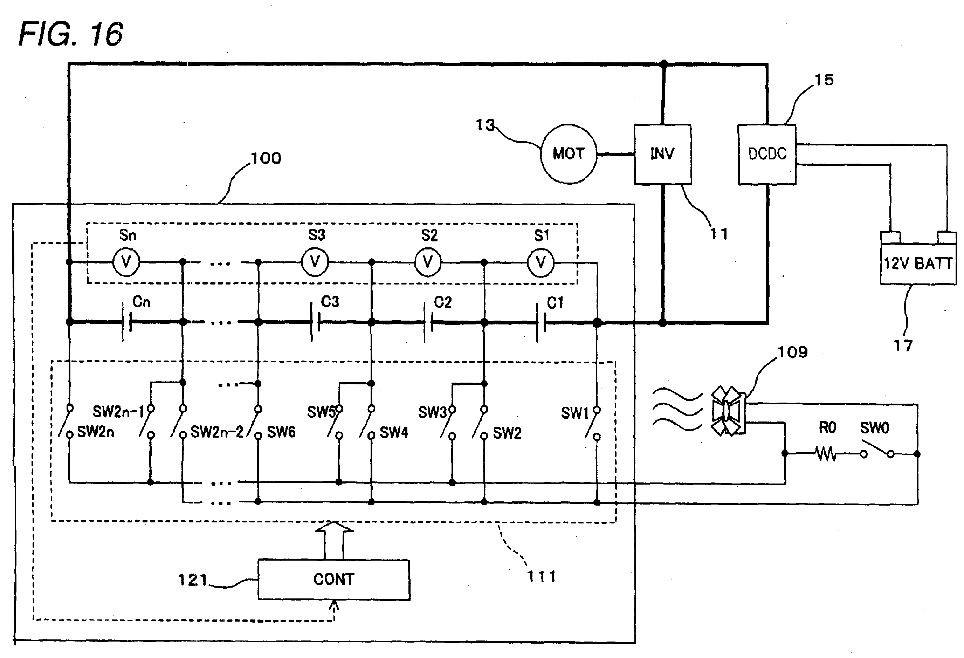

In addition, the operation of the electric motor 109 is ensured by a drive voltage of 9 to 14V. Not only in this embodiment but also in other embodiments, the auxiliary is not limited to the cooling fan electric motor 109 but may be an electric motor for a coolant pump or an electric motor for a blower of an air cleaner. In addition, a destination to the supply of electric power by the cell discharge is not limited to the electric motor 109 which is the rotary induction load but may be a feeding circuit for feeding a capacity variable load. The capacity variable load includes a hot wire used in a seat heater, a lamp used as a back light for an instrument cluster, a Peltier element, an air cleaner and the like. Furthermore, electric power resulting from cell discharge may be supplied not only to the electric motor 109 but also to the electric motor 109 and other auxiliaries at the same time. For example, as is shown in Fig. 16, a configuration may be adopted in which a load driving feeding circuit R0 and a switch sW0, which are connected in series with each other, are connected in parallel with the electric motor 109.

The electric storage pack 100 shown in Fig. 1 has a plurality of lithium ion electric rechargeable cells (hereinafter, referred to simply as "cells") C1 to Cn (n is an integer which is 2 or larger) which are connected in series, a discharge switch unit 111 which is connected to the cells C1 to Cn in parallel, voltage detection units S1 to Sn which are connected to the respective cells in parallel, and a control unit 121 for controlling the discharge switch unit 111. In addition, the discharge switch unit 111, the voltage detection units S1 to Sn and the control unit 121 are integrated into an IC chip.

Here, a single output voltage range of the cells C1 to Cn is in the range of 3.0 to 4.0V. Note that a relationship between SOC (State of Charge) and output voltage of a lithium ion battery is substantially linear. In the electric storage pack equipped on the vehicle, charging and discharging are repeated within a predetermined range of residual capacity (SOC) of the cells.

The discharge switch unit 111 has switches SW1 to SW2n which are connected between the cells. In addition, the switches SW1 and SW2, SW4, ... , SW2n-2 are connected to a negative side input terminal of the electric motor 109, while the switches SW3, SW5, ...., SW2n-1 and SW2n are connected to a positive side input terminal of the electric motor 109.

The voltage detection units S1 to Sn detect voltages at both ends of the cells with which they are connected in parallel (cell voltages). In addition, the voltage detection units S1 to Sn detect cell voltages of the cells continuously or periodically and send detection results to the control unit 121.

The control unit 121 determines the SOC of the respective cells based on the detection results sent from the voltage detection units S1 to Sn. In addition, as has been described above, the relationship of SOC and output voltage of the lithium ion battery is substantially linear and a relationship of SOC and output voltage of each cell is also substantially linear. The control unit 121 on/off controls individually the switches SW1 to SW2n within the discharge switch unit 111 based on latest detection results in relation to SOC so that the SOC of the cells, that is, cell voltages of the cells become the same in level. For example, the control unit 121 makes uniform the cell voltages of the electric rechargeable cells by repeating an operation of supplying electric power discharged from the electric rechargeable cell having the highest cell voltage to the electric motor 109.

The state in which the cell voltages of the electric rechargeable cells of the electric storage pack 100 are the same in level means a state in which a difference between the highest cell voltage and the lowest cell voltage in the electric rechargeable cells C1 to Cn provided in the electric storage pack 100 (a cell voltage variation width) is equal to or smaller than a predetermined value. Hereinafter, this state will be referred to as a "uniformed state." The control unit 121 determines whether the electric rechargeable cells C1 to Cn in the electric storage pack 100 are in a uniformed state or a non-uniformed state based on latest determination results on cell voltages which are sent from the voltage detection units S1 to Sn.

In addition, even after the electric rechargeable cells C1 to Cn have been put in the uniformed state, the control unit 121 on/off controls individually the switches SW1 to SW2n in the discharge switch unit 111 so as to supply electric power from the electric storage pack 100 to the electric motor 109. The details of a discharge control by the control unit 121 when the electric rechargeable cells of the electric storage pack 100 are in the uniformed state will be described later.

A discharge line from at least one cell to the electric motor 109 is formed by the on/off control of the switches SW1 to SW2n by the control unit 121. Consequently, electric power is supplied to the electric motor 109 from the electric rechargeable cell included in a closed circuit formed by the on/off control by the control unit 121. For example, when the control unit 121 switches on the switches SW1, SW3 and switches off the other switches, electric power is supplied to the electric motor 109 from the electric rechargeable cell C1. In addition, when the control unit 121 switches on the switches SW4, SW2n and switches off the other switches, electric power is supplied to the electric motor from the electric rechargeable cells C3 to Cn.

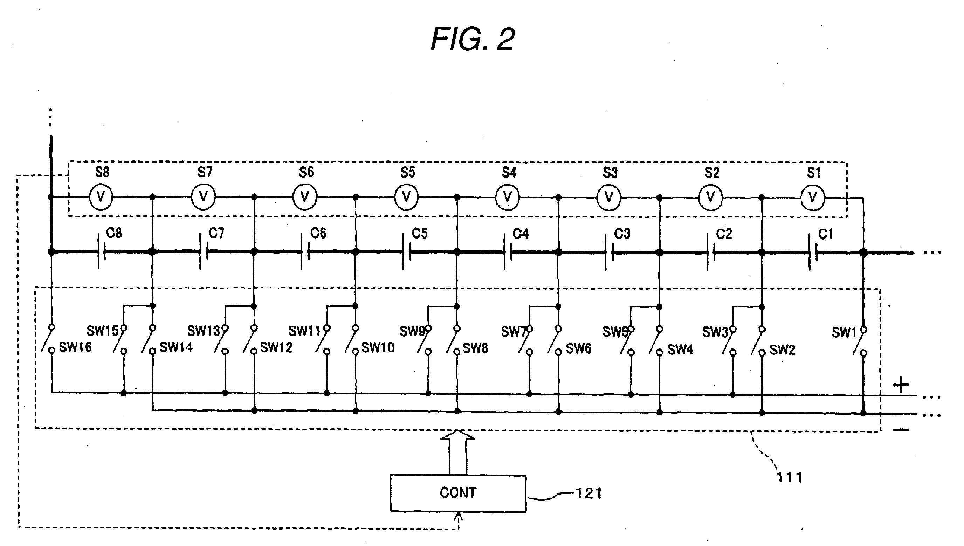

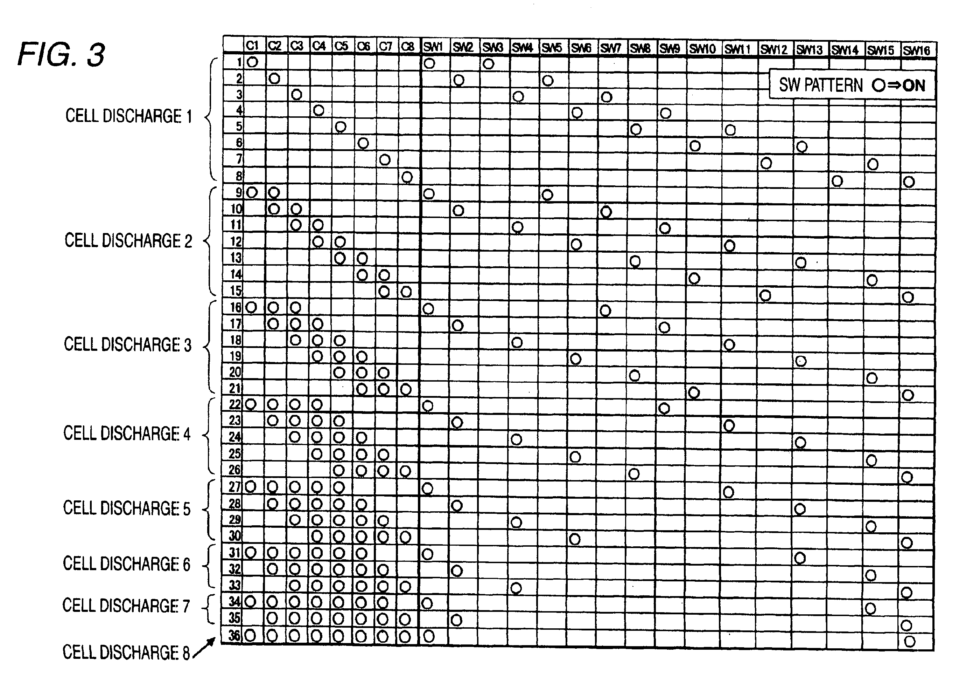

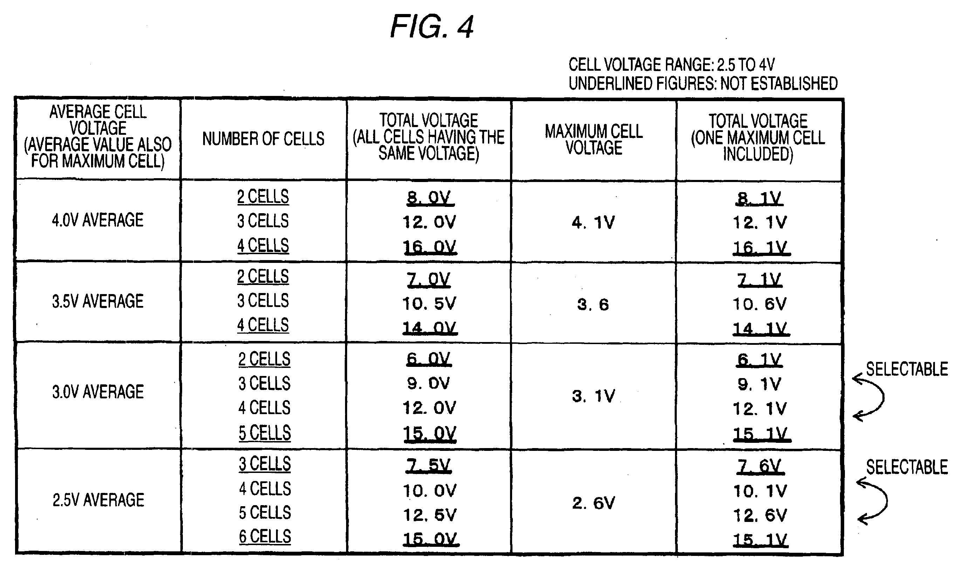

Fig. 2 is a circuit diagram showing the electric storage pack 100 of the first embodiment which has eight cells C1 to C8. Fig. 3 is a diagram showing cell discharges to the electric storage pack shown in Fig. 2 and an on/off pattern of switches. Fig. 4 is a diagram showing a relationship between a single cell's output voltage, the number of discharge cells, a maximum cell voltage and a discharge voltage. When the electric rechargeable cells of the electric storage pack 100 are in the uniformed state, the control unit 121 performs on/off controls of the switches SW1 to SW2n, which will be described below, while referring to detection results by the voltage detection units S1 to Sn.

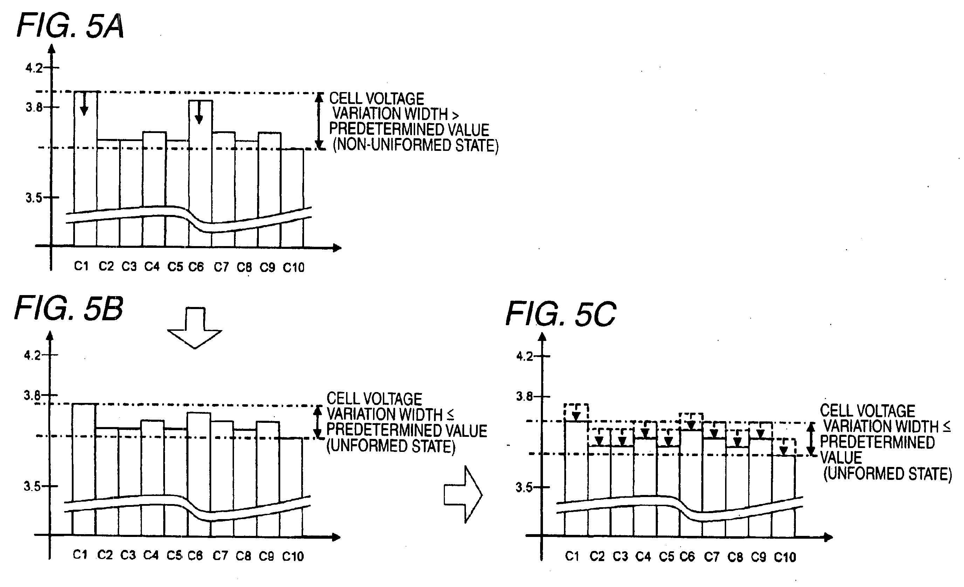

Hereinafter, a discharge control will be described which is performed by the control unit 121 of the first embodiment in the uniformed state by reference to Fig. 5. Fig. 5 shows diagrams showing one example of cell voltages of electric rechargeable cells installed in the electric storage pack 100 of the first embodiment. In the example shown in Fig. 5, the electric storage pack 100 has 10 electric rechargeable cells.

When cell voltages of the electric rechargeable cells installed in the electric storage pack 100 shifts from a state shown in Fig. 5A in which the cell voltages vary (a non-uniformed state) to a state shown in Fig. 5B in which the cell voltages do not vary (a uniformed state), the control unit 121 on/off controls the switches of the discharge switch unit 111 in such a manner that all the electric rechargeable cells are discharged for a constant period of time sequentially electric rechargeable cell by electric rechargeable cell. For example, the electric rechargeable cells are discharged for one minute sequentially starting from the electric rechargeable cell C1.

When the electric rechargeable cells are discharged sequentially from the electric rechargeable cell C1 to the electric rechargeable cell C10 in the uniformed state shown in Fig. 5B, electric power can be supplied from the electric storage pack 100 to the electric motor 109 while maintaining a uniformed state shown in Fig. 5C. In addition, when the discharge from the electric rechargeable cell C10 is completed, the control unit 121 performs a similar on/off control in such a manner that the electric rechargeable cells are discharged sequentially again from the electric rechargeable cell C1. The discharge control by the control unit 121 continues until the electric storage pack 100 comes into the non-uniformed state.

In addition, when a discharge is started from the electric rechargeable cell C10 in the state shown in Fig. 5(b) , the cell voltage variation width is surpassed while the electric rechargeable cell C10 is being discharged. Therefore, the control unit 121 immediately determines that the electric storage pack 100 is put in the non-uniformed state. Because of this, in the embodiment, a hysteresis is provided in a predetermined value of the cell voltage variation width based on which the control unit 121 determines whether or not the electric storage pack 100 is in the uniformed state. Namely, a larger value than a predetermined value which is used for the control unit 121 to determine that the electric storage pack 100 is put in the uniformed state as a result of the cell voltages changing from the non-uniformed state is used for the predetermined value of the cell voltage variation width which is used for the control unit 121 to determine that the electric storage pack 100 is put in the non-uniformed state as a result of the cell voltages changing from the uniformed state. Consequently, even though the electric rechargeable cell C10 is started to be discharged from the state shown in Fig. 5B, there occurs no such situation that the control unit 121 immediately determines that the electric storage pack 100 is put in the non-uniformed state.

In the discharge control described above which is performed when the electric storage pack 100 is in the uniformed state, all the electric rechargeable cells are discharged for the constant period of time sequentially electric rechargeable cell by electric rechargeable cell. However, the electric rechargeable cells may be discharged sequentially electric rechargeable cell by electric rechargeable cell until the cell voltages of the electric rechargeable cells drop by a predetermined voltage (for example, 0.1 V) . In addition, the electric rechargeable cells may be discharged sequentially electric rechargeable cell by electric rechargeable cell until the cell voltages of the electric rechargeable cells drop to a predetermined voltage. The predetermined voltage may be a lowest cell voltage in all the electric rechargeable cells or may be a fixed voltage which is lower than the lowest cell voltage.

Furthermore, all the electric rechargeable cells do not have to be discharged. Electric rechargeable cells to be discharged may be restricted to electric rechargeable cells having larger cell voltages than an average value of the cell voltages of the electric rechargeable cells C1 to C10 (an average cell voltage of all the electric rechargeable cells). The electric rechargeable cells so restricted or specified are discharged sequentially electric rechargeable cell by electric rechargeable cell for a constant period of time or until the cell voltages of the electric rechargeable cells drop by a predetermined voltage. The average cell voltage of the cell voltages of all the electric rechargeable cells is calculated by the control unit 121 based on the cell voltages of the respective electric rechargeable cells obtained from the voltage detection units S1 to Sn.

As has been described heretofore, according to the discharge control that is performed by the control unit 121 of the embodiment, the uniforming operation of the cell voltages is performed in the non-uniformed state. However, when the electric storage pack 100 is in the uniformed state, all the electric rechargeable cells or the electric rechargeable cells having the cell voltages larger than the average cell voltage of all the electric rechargeable cells are discharged sequentially electric rechargeable cell by electric rechargeable cell for the constant period of time or until the cell voltages drop by the predetermined voltage. Because of this, even when the electric storage pack 100 is in the uniformed state, electric power can be supplied from the electric storage pack 100 to the electric motor 109. In addition, although the cell voltage variation width in the uniformed state is narrow, the uniforming operation of cell voltages is performed which is different from the uniforming operation of cell voltages which is performed in the non-uniformed state. Therefore, no frequent switching occurs in the switches possessed by the discharge switch unit 111.

### (Second Embodiment)

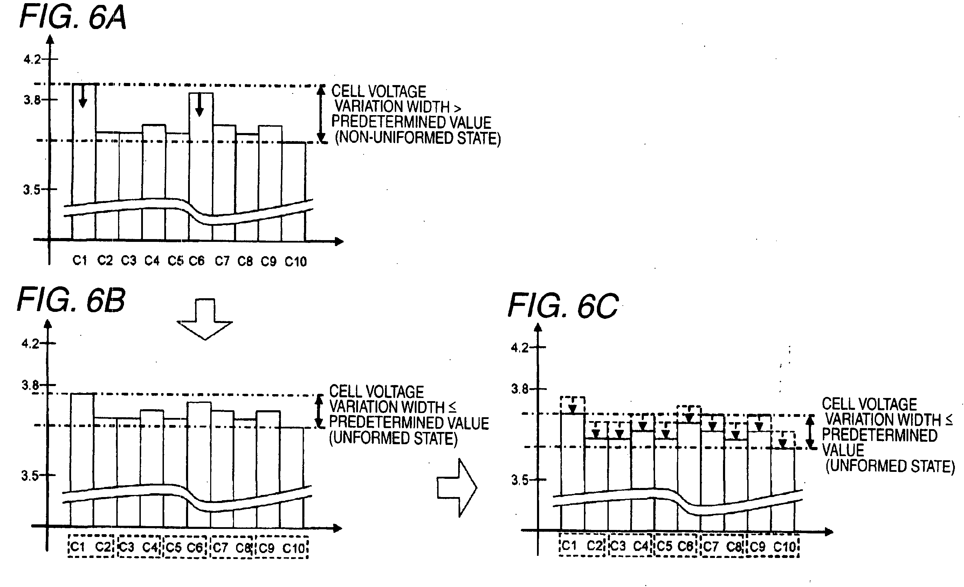

In a second embodiment, a discharge control that is performed by a control unit 121 of an electric storage pack 100 in a uniformed state differs from that of the first embodiment. Figs. 6A to 6C shows diagrams showing one example of cell voltages of electric rechargeable cells installed in the electric storage pack 100 of the second embodiment. In the example shown in Figs. 6A to 6C, the electric storage pack 100 has 10 electric rechargeable cells.

When cell voltages of the electric rechargeable cells installed in the electric storage pack 100 shifts from a state shown in Fig. 6A in which the cell voltages vary (a non-uniformed state) to a state shown in Fig. 6B in which the cell voltages do not vary (a uniformed state), the control unit 121 designates two electric rechargeable cells as forming a group and divides the electric rechargeable cells C1 to C10 into five groups: the electric rechargeable cells C1, C2 into a group G1, the electric rechargeable cells C3, C4 into a group G2, the electric rechargeable cells C5, C6 into a group G3, the electric rechargeable cells C7, C8 into a group G4 and the electric rechargeable cells C9, C10 into a group G5 . After having completed the group setting operation, the control unit 121 on/off controls of switches of a discharge switch unit 111 in such a manner that all the groups are discharged for a constant period of time sequentially group by group. For example, the groups are discharged for one minute sequentially starting from the group G1.

When the groups are discharged sequentially group by group from the group G1 to the group G5 in the uniformed state shown in Fig. 6B, electric power can be supplied from the electric storage pack 100 to an electric motor 109 while maintaining a uniformed state shown in Fig. 6C. In addition, when the discharge from the group G5 is completed, the control unit 121 performs a similar on/off control in such a manner that the groups are discharged sequentially again from the group G1. The discharge control by the control unit 121 continues until the electric storage pack 100 comes into the non-uniformed state.

Also in the embodiment, a hysteresis similar to that of the first embodiment is provided in a predetermined value of a cell voltage variation width based on which the control unit 121 determines whether or not the electric storage pack 100 is in the uniformed state. Consequently, even though a discharge is initiated from the group G5 in the state shown in Fig. 6B, there occurs no such situation that the control unit 121 immediately determines that the electric storage pack 100 is put in the non-uniformed state. In addition, in the discharge control described above as being performed when the electric storage pack 100 is in the uniformed state, although all the groups are discharged sequentially group by group for the constant period of time, all the groups may be discharged sequentially group by group until the cell voltages of the electric rechargeable cells drop by a predetermined voltage (for example, 0.1 V). Furthermore, in the embodiment, although two electric rechargeable cells are designated as forming a group, three or more electric rechargeable cells may be designated as forming a group.

As has been described heretofore, according to the discharge control performed by the control unit 121 of the embodiment, the uniforming operation of the cell voltages is performed in the non-uniformed state, when the electric storage pack 100 is in the uniformed state. However, all the groups are discharged sequentially group by group for the constant period of time or until the cell voltages drop by the predetermined voltage. Because of this, even when the electric storage pack 100 is in the uniformed state, electric power can be supplied from the electric storage pack 100 to the electric motor 109. In addition, as with the first embodiment, no frequent switching occurs in the switches possessed by the discharge switch unit 111.

### (Third embodiment)

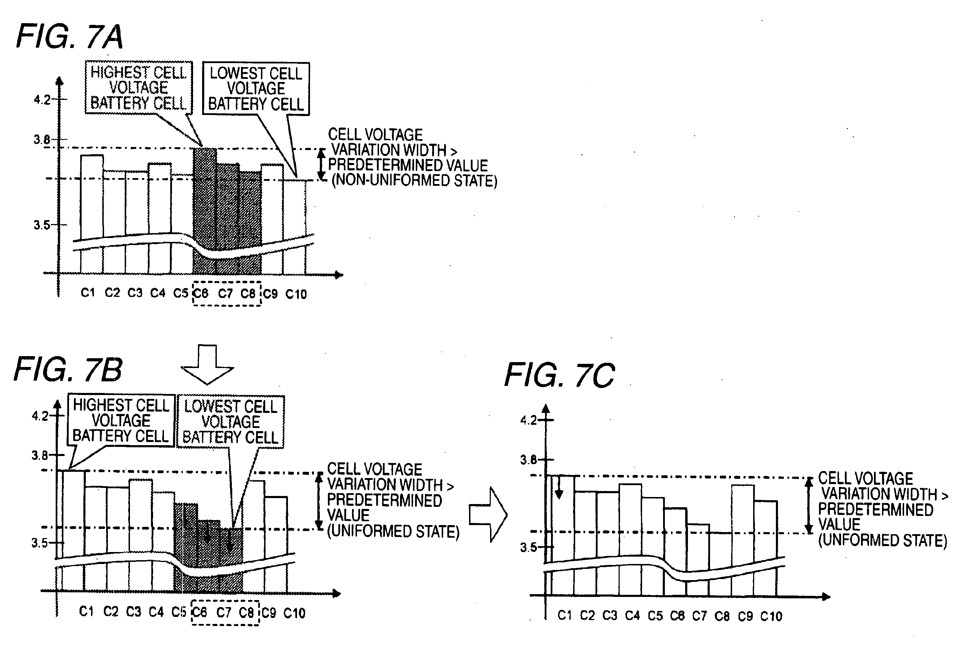

In a third embodiment, a discharge control that is performed by a control unit 121 of an electric storage pack 100 in a uniformed state differs from those of the first embodiment and the second embodiment. Figs. 7A to 7C show diagrams showing one example of cell voltages of electric rechargeable cells installed in the electric storage pack 100 of the third embodiment. In the example shown in Fig. 7A to 7C, the electric storage pack 100 has 10 electric rechargeable cells.

When cell voltages of the electric rechargeable cells installed in the electric storage pack 100 are in a state shown in Fig. 7A in which they do not vary (a uniformed state), the control unit 121 designates three consecutive electric rechargeable cells C6 to C8 which include the electric rechargeable cell C6 having a highest cell voltage in the electric rechargeable cells C1 to C10 installed in the electric storage pack 100 (a highest cell voltage electric rechargeable cell) as forming a group. After having completed the group setting operation, the control unit 121 on/off controls switches of a discharge switch unit 111 in such a manner that the electric rechargeable cells are discharged starting from the electric rechargeable cells C6 to C8 which are designated as forming the group.

The discharge from the electric rechargeable cells in the group in question continues to be performed until a cell voltage variation width of the electric rechargeable cells installed in the electric storage pack 100 surpasses a predetermined value so that the electric storage pack 100 is put in a non-uniformed state. In the example shown in Figs. 7A to 7C, when the discharge from the electric rechargeable cells C6 to C8 which are designated as forming the group is started, the electric rechargeable cell C1 constitutes a electric rechargeable cell having a highest cell voltage in the electric rechargeable cells C1 to C10 installed in the electric storage pack 100 (a highest cell voltage electric rechargeable cell). The electric rechargeable cell C8 constitutes an electric rechargeable cell having a lowest cell voltage in the electric rechargeable cells C1 to C10 installed in the electric storage pack 100 (a lowest cell voltage electric rechargeable cell). The discharge from the electric rechargeable cells C6 to C8 which are designated as forming the group continues to be performed until a difference between a cell voltage of the highest cell voltage electric rechargeable cell C6 and a cell voltage of the lowest cell voltage electric rechargeable cell C8 surpasses a predetermined value. When the electric storage pack 100 is put in the non-uniformed state, the control unit 121 performs a cell voltage uniforming operation.

In the discharge control described above as being performed when the electric storage pack 100 is in the uniformed state, while the three consecutive electric rechargeable cells which include the highest cell voltage electric rechargeable cell are designated as forming the group, the number of cells to be so designated is not limited to three. Hence, two or four or more electric rechargeable cells may be so designated. However, in the event that the number of electric rechargeable cells to be so designated becomes too large, a state results in which an excessive voltage is applied to the electric motor 109. Consequently, the control unit 121 determines a number of electric rechargeable cells which can fall within a voltage range which can be applied to the electric motor 109. In addition, a load power efficiency of the electric motor 109 becomes better as the application voltage becomes higher within the applicable voltage range. Because of this, the control unit 121 determines the number of electric rechargeable cells in such a manner that an accumulated cell voltage of the electric rechargeable cells which are designated as forming a group takes a maximum value within the applicable voltage range.

In the example shown in Fig. 7A, since the cell voltage of the highest cell voltage electric rechargeable cell C6 is about 3.75 V, the cell voltage of the electric rechargeable cell C7 is about 3.70 V, and the cell voltage of the electric rechargeable cell C8 is about 3.65 V, an accumulated cell voltage from these three electric rechargeable cells C6 to C8 becomes about 11.10 V. In this state, in the case that one more electric rechargeable cell is designated as forming the group, the accumulated cell voltage becomes 14 V or higher, and the resulting accumulated cell voltage surpasses the applicable voltage range of the electric motor 109. Consequently, in the state shown in Fig. 7A, in the case that the three electric rechargeable cells C6 to C8 are designated as forming the group, a best load power efficiency for the electric motor 109 can be realized.

In addition, in the cell voltages of the respective electric rechargeable cells shown in Fig 7A, when designating the three consecutive electric rechargeable cells C6 to C8 which include the highest cell voltage electric rechargeable cell C6 as forming the group, the following forms are considered: a form in which the aforesaid electric rechargeable cells C6 to C8 are designated as forming the group; a form in which the electric rechargeable cells C5 to C7 are designated as forming the group; a form in which the electric rechargeable cells C4 to C6 are designated as forming the group. The control unit 121 can select any of the three forms described above based on a group setting operation which will be described below.

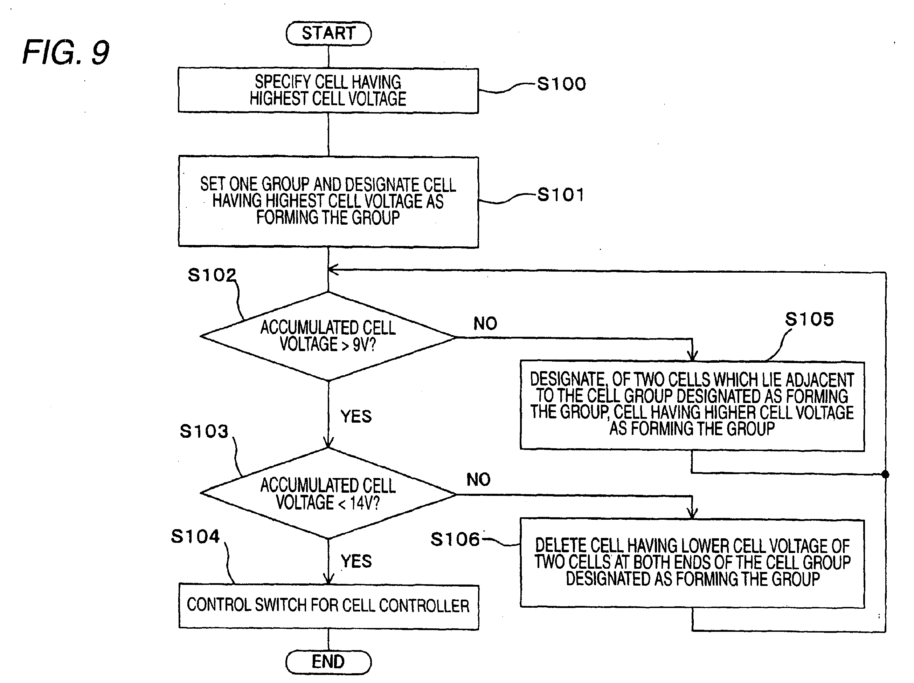

Hereinafter, a group setting will be described by reference to Fig. 9 which is performed when designating a plurality of electric rechargeable cells including a highest cell voltage electric rechargeable cell as forming a group. Fig. 9 is a flowchart illustrating a group setting operation by the control unit 121 possessed by the electric storage pack 100 of the third embodiment.

As is shown in Fig. 9, at step S100, the control unit 121 specifies an electric rechargeable cell having a highest cell voltage in the electric rechargeable cells installed in the electric storage pack 100 based on the cell voltages of the respective electric rechargeable cells. Namely, the control unit 121 specifies an electric rechargeable cell whose SOC is highest. Next, at step S101, the control unit 121 designates the electric rechargeable cell having the highest cell voltage as forming a group. Next, at step S102, the control unit 121 determines whether or not an accumulated cell voltage of the electric rechargeable cells which are designated as forming the group is larger than 9 V. If the accumulated cell voltage is larger than 9 V, the group setting operation proceeds to step S103, where the control unit 121 determines whether or not the accumulated cell voltage is smaller than 14 V. If the accumulated cell voltage is smaller than 14 V, the group setting operation proceeds to step S104, where the control unit 121 on/off controls the switches of the discharge switch unit 111 in such a manner that a discharge line is formed from the electric rechargeable cell designated as forming the group to the electric motor 109.

If it is determined from the result of the determination at step S102 that the accumulated cell voltage is equal to or smaller than 9 V, the group setting operation proceeds to step S105. At step S105, the control unit 121 designates one cell having a higher cell voltage of two electric rechargeable cells which lie adjacent to the group of the electric rechargeable cells which are designated as forming the group, and the group setting operation returns to step S102. In addition, If it is determined from the result of the determination at step S103 that the accumulated cell voltage is equal to or larger than 14 V, the group setting operation proceeds to step 5106. At step S106, the control unit 121 designates one cell having a lower cell voltage of the two electric rechargeable cells which lie at both end limits of the group of the electric rechargeable cells which are designated as forming the group, and the group setting operation returns to step S102.

Hereinafter, a case will be described in which the group setting operation based on the flow described by reference to Fig. 9 is carried out on the electric storage pack 100 whose cell voltages are shown in Fig. 7A. After having designated the electric rechargeable cell C6 having the highest cell voltage, the control unit 121 determines whether or not the cell voltage of the electric rechargeable cell C6 is larger than 9 V. If the cell voltage of the electric rechargeable cell C6 is equal to or smaller than 9 V, the control unit 121 designates, of the two electric rechargeable cells C5, C7 which adjacent to the electric rechargeable cell C6, the electric rechargeable cell C7 having a higher cell voltage as forming the group. Then, the control unit 121 determines whether or not an accumulated cell voltage of the cell voltages of the electric rechargeable cells C6, C7 is larger than 9 V. If the accumulated cell voltage of the electric rechargeable cells C6, C7 is equal to or smaller than 9 V, the control unit 121 designates, two electric rechargeable cells C5, C8 which are adjacent to the group of electric rechargeable cells (electric rechargeable cell C6, electric rechargeable cell C7), the electric rechargeable cell C8 having a higher cell voltage as forming the group.

Next, the control unit 121 determines whether or not the accumulated cell voltage of the electric rechargeable cells C6 to C8 is larger than 9V. If the accumulated cell voltage of the electric rechargeable cells C6 to C8 is larger than 9 V, the control unit 121 then determines whether or not the accumulated cell voltage of the electric rechargeable cells C6 to C8 is smaller than 14 V. If the accumulated cell voltage is smaller than 14 V, having set the electric rechargeable cells C6 to C8 into one group, the control unit 121 on/off controls the switches of the discharge switch unit 111 in such a manner that a discharge line is formed from the electric rechargeable cells C6 to C7 to the electric motor 109.

If the accumulated cell voltage is equal to or larger than 14 V in such a state that the electric rechargeable cells C5 to C8 are set into one group, the control unit 121 releases, of two electric rechargeable cells C5, C8 which lie at both ends of the electric rechargeable cells C5 to C8 which are designated as forming the one group, the electric rechargeable cell C5 having a lower cell voltage from the designation as forming the one group or excludes the electric rechargeable cell C5 from the group.

According to the discharge control performed by the control unit 121 of the embodiment, the uniforming operation of the cell voltages is executed in the non-uniformed state. When the electric storage pack 100 is in the uniformed state, the control unit 121 designates the consecutive electric rechargeable cells which include the highest cell voltage electric rechargeable cell as forming the group, and the electric rechargeable cells of the group continue to be discharged until the electric storage pack 100 is put in the non-uniformed state. Therefore, even though the electric storage pack 100 is in the uniformed state, electric power in which the load power efficiency of the electric motor 109 for the plurality of electric rechargeable cells is good can be supplied from the electric storage pack 100 to the electric motor 109. In addition, as with the first embodiment, no frequent switching is generated in the switches possessed by the discharge switch unit 111.

### (Fourth Embodiment)

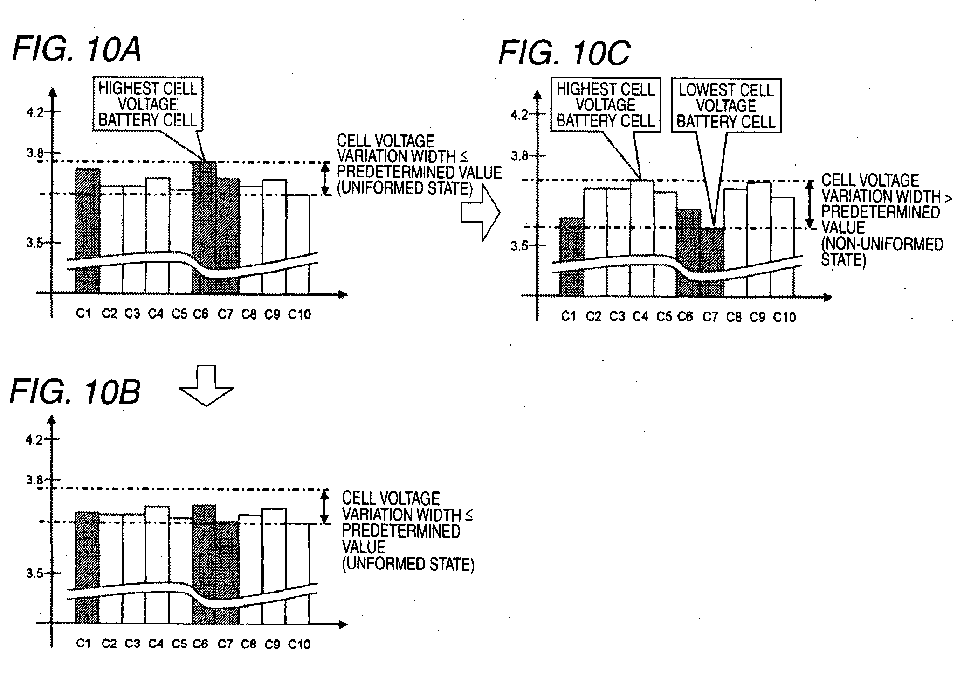

In a fourth embodiment, a discharge control that is performed by a control unit 121 of an electric storage pack 100 in a uniformed state differs from those of the first embodiment to the third embodiment. Figs. 10A to 10C show diagrams showing one example of cell voltages of electric rechargeable cells installed in the electric storage pack 100 of the fourth embodiment. In the example shown in Figs. 10A to 10C, the electric storage pack 100 has 10 electric rechargeable cells.

When cell voltages of the electric rechargeable cells installed in the electric storage pack 100 are in a state shown in Fig. 10A in which they do not vary (a uniformed state), the control unit 121 designates as forming a group a electric rechargeable cell C6 having a highest cell voltage, a electric rechargeable cell C1 having a second highest cell voltage and a electric rechargeable cell C7 having a third highest cell voltage in electric rechargeable cells C1 to C10 installed in the electric storage pack 100. After having completed the group setting operation, the control unit 121 on/off controls switches of a discharge switch unit 111 in such a manner that the electric rechargeable cells C6, C1, C7 which are designated as forming the group are discharged for a constant period of time. In addition, the electric rechargeable cells C6, C1, C7 which are designated as forming the group may be discharged until the cell voltages of the electric rechargeable cells so designated drop by a predetermined voltage (for example, 0.1 v). Furthermore, the discharge from the electric rechargeable cells C6, C1, C7 may continue until a difference between a cell voltage of a highest cell voltage electric rechargeable cell C4 and a cell voltage of a lowest cell voltage electric rechargeable cell C7 surpasses a predetermined value as is shown in Fig. 10A.

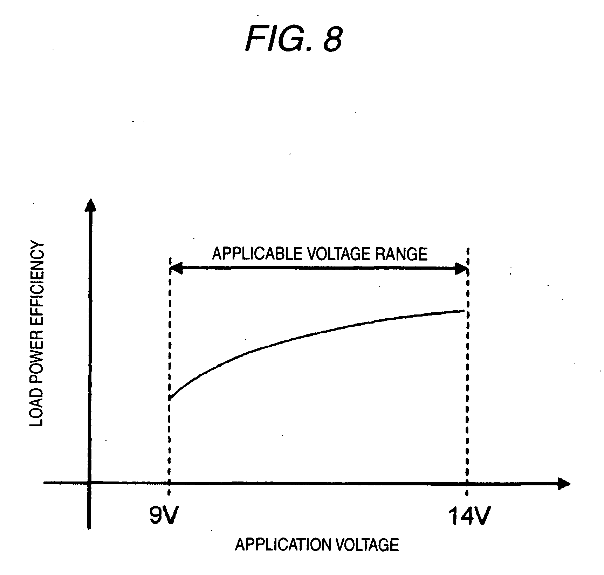

Furthermore, the number of cells to be designated as forming a group is not limited to three. Hence, two or four or more electric rechargeable cells may be so designated. However, as is shown in Fig. 8, there is a voltage range which can be applied to the electric motor 109 or an applicable voltage range of the electric motor 109, and a load power efficiency of the electric motor 109 becomes better as the application voltage becomes higher within the applicable voltage range. Therefore, the control unit 121 determines the number of electric rechargeable cells in such a manner that an accumulated cell voltage of the electric rechargeable cells which are designated as forming a group takes a maximum value within the applicable voltage range.

In the example shown in Fig. 10A, the cell voltage of the highest cell voltage electric rechargeable cell C6 is about 3.75 V, the voltage of the second highest cell voltage electric rechargeable cell C1 is about 3.75 V, and the third highest cell voltage electric rechargeable cell C7 is about 3.70 V. Therefore, an accumulated cell voltage from the three electric rechargeable cells C6, C1 and C7 becomes about 11.20 V. In this state, in the case that one more electric rechargeable cell is designated as forming the group, the accumulated cell voltage becomes 14 V or higher, and the resulting accumulated cell voltage surpasses the applicable voltage range of the electric motor 109. Consequently, in the state shown in Fig. 10A, in the case that the three electric rechargeable cells C6, C1 and C7 are designated as forming the group, a best load power efficiency for the electric motor 109 can be realized.

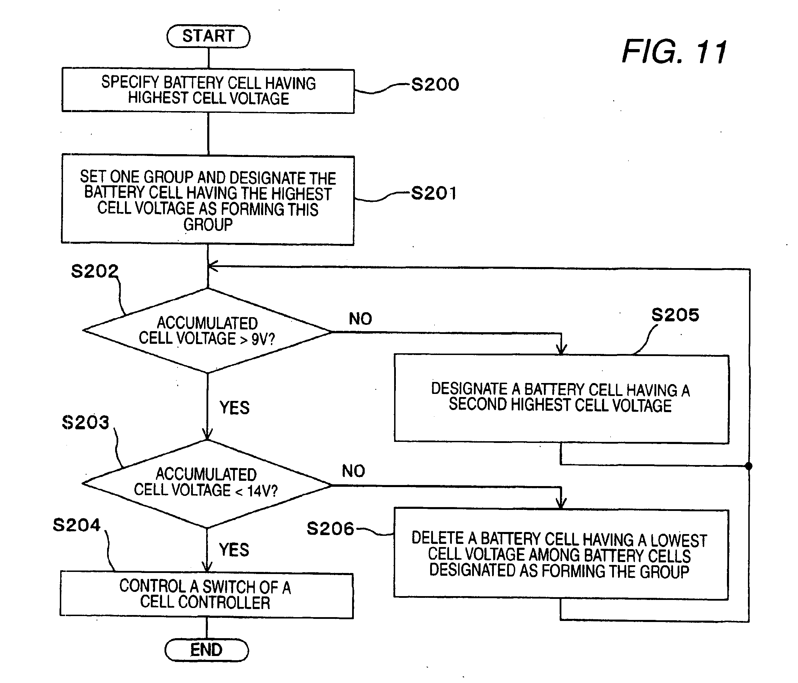

Referring to Fig. 11, a group setting operation will be described which is executed when designating a plurality of electric rechargeable cells including a highest cell voltage electric rechargeable cell as forming a group. Fig. 11 is a flowchart illustrating a group setting operation executed by the control unit 121 possessed by the electric storage pack 100.

As is shown in Fig. 11, at step S200, the control unit 121 specifies the electric rechargeable cell having the highest cell voltage in the electric rechargeable cells installed in the electric storage pack 100 based on the cell voltages of the respective electric rechargeable cells. Namely, the control unit 121 specifies the electric rechargeable cell whose SOC is highest. Next, at step S201, the control unit 121 designates the electric rechargeable cell having the highest cell voltage as forming a group. Next, at step S202, the control unit 121 determines whether or not an accumulated cell voltage of the cell voltages of the electric rechargeable cells which are designated as forming the group is larger than 9 V. If the accumulated cell voltage is larger than 9 V, the group setting operation proceeds to step S203, where the control unit 121 determines whether or not the accumulated cell voltage is smaller than 14 V. If the accumulated cell voltage is smaller than 14 V, the group setting operation proceeds to step S204, where the control unit 121 on/off controls the switches of the discharge switch unit 111 in such a manner that a discharge line is formed from the electric rechargeable cells designated as forming the group to the electric motor 109.

If it is determined as a result of the determination carried out at step S202 that the accumulated cell voltage is equal to or smaller than 9 V, the group setting operation proceeds to step S205. At step S205, the control unit 121 designates the electric rechargeable cell having the second highest cell voltage as forming the group. Thereafter, the group setting operation returns to step S202. In addition, if it is determined as a result of the determination carried out at step S203 that the accumulated cell voltage is equal to or larger than 14 V, the group setting operation proceeds to step S106. At step S106, the control unit 121 releases the lowest cell voltage electric rechargeable cell in the electric rechargeable cells designated as forming the group from the designation as forming the group or excludes the lowest cell voltage electric rechargeable cell from the group. Thereafter, the group setting operation returns to step S202.

According to the discharge control that is executed by the control unit 121 of the embodiment, the uniforming operation of the cell voltages is performed in the non-uniformed state, when the electric storage pack 100 is in the uniformed state. However, the plurality of electric rechargeable cells including the highest cell voltage electric rechargeable cell are designated as forming the group. The electric rechargeable cells so designated as forming the group are discharged for the constant period of time or until the cell voltages of the electric rechargeable cells so designated drop by the predetermined voltage. Because of this, even though the electric storage pack 100 is in the uniformed state, electric power in which the load power efficiency of the electric motor 109 for the plurality of electric rechargeable cells is good can be supplied from the electric storage pack 100 to the electric motor 109. In addition, as with the first embodiment, no frequent switching is generated in the switches possessed by the discharge switch unit 111.

## Claims

1. A discharge control system for an electric storage pack (100) which has a plurality of electric rechargeable cells connected in series, said system comprising:
a plurality of cell voltage detection units which detect respective cell voltages of the electric rechargeable cells;
a switch group including a plurality of switches which are respectively connected between the plurality of electric rechargeable cells; and
a control unit (121) forming one discharge line of the discharge lines from at least any one of the electric rechargeable cells to a rotary inductive load or a load driving feeding circuit, wherein
the control unit (121) controls individually the switches of the switch group in accordance with detection results by the cell voltage detection units when a difference between a highest cell voltage and a lowest cell voltage in the electric rechargeable cells of the electric storage pack (100) is equal to or smaller than a predetermined value.

2. A discharge control system according to Claim 1, wherein
the electric rechargeable cells comprise lithium ion electric rechargeable cells.

3. A discharge control system according to any of the preceding claims, wherein
the control unit (121) controls individually the switches of the switch group such that the electric rechargeable cells of the electric storage pack (100) are discharged sequentially cell by cell.

4. A discharge control system according to any of the preceding claims, wherein
the control unit (121) specifies at least one of the plurality of the electric rechargeable cells having a larger cell voltage than an average cell voltage value of the electric rechargeable cells of the electric storage pack (100) and controls individually the switches of the switch group such that the electric rechargeable cells are discharged sequentially cell by cell from the specified electric rechargeable cell.

5. A discharge control system according to any of the preceding claims, wherein
when elapsing a predetermined period of time since the start of a discharge from one electric rechargeable cell, the control unit (121) forms a discharge line from a next electric rechargeable cell to the rotary inductive load or the load driving feeding circuit.

6. A discharge control system according to any of the preceding claims, wherein
when the cell voltage of one electric rechargeable cell drops by a predetermined voltage as a result of a discharge from the electric rechargeable cell, the control unit (121) forms a discharge line from a next electric rechargeable cell to the rotary inductive load or the load driving feeding circuit.

7. A discharge control system according to any of the preceding claims, wherein
when the cell voltage of one electric rechargeable cell drops to be a predetermined voltage as a result of a discharge from the electric rechargeable cell, the control unit (121) forms a discharge line from a next electric rechargeable cell to the rotary inductive load or the load driving feeding circuit.

8. A discharge control system according to any of the preceding claims, wherein
the control unit (121) divides the electric rechargeable cells of the electric storage pack (100) into a plurality of groups each including the same number of electric rechargeable cells and controls individually the switches of the switch group such that the plurality of groups of electric rechargeable cells are discharged sequentially group by group.

9. A discharge control system according to any of the preceding claims, wherein
a plurality of adjacent electric rechargeable cells are designated as forming each group.

10. A discharge control system according to any of the preceding claims, wherein
when elapsing a predetermined period of time since the start of a discharge from one group, the control unit (121) forms a discharge line from a next group to the rotary inductive load or the load driving feeding circuit.

11. A discharge control system according to any of the preceding claims, wherein
when the cell voltage of each of the electric rechargeable cells designated as forming one group drops by a predetermined voltage as a result of a discharge from the group, the control unit (121) forms a discharge line from a next group to the rotary inductive load or the load driving feeding circuit.

12. A discharge control system according to any of the preceding claims, wherein
the control unit (121) designates the one of the plurality of the electric rechargeable cells having the highest cell voltage in the plurality of electric rechargeable cells of the electric storage pack (100) as forming a group and forms a discharge line from the electric rechargeable cell in the group to the rotary inductive load or the load driving feeding circuit.

13. A discharge control system according to any of the preceding claims, wherein
the control unit (121) selects the electric rechargeable cell to be designated as forming the group such that a discharge voltage of the electric rechargeable cell falls within a voltage range which can drive the rotary inductive load or the load driving feeding circuit.

14. A discharge control system according to any of the preceding claims, wherein
the control unit (121) designates a plurality of adjacent electric rechargeable cells as forming the group.

15. A discharge control system according to any of the preceding claims, wherein
when designating the plurality of electric rechargeable cell as forming a group, the control unit (121) designates the electric rechargeable cells in the order of the electric rechargeable cell having a higher cell voltage.

16. A discharge control system according to any of the preceding claims, wherein
the control unit (121) implements a discharge from the electric rechargeable cells designated as forming the group to the rotary inductive load or the load driving feeding circuit until a difference between a lowest cell voltage in the electric rechargeable cells designated as forming the group and a highest cell voltage in the electric rechargeable cells of the electric storage pack (100) exceeds the predetermined value.

17. A discharge control system according to any of the preceding claims, wherein
the switch group has:
a first switch group including a plurality of first switches which are connected to a negative side input terminal of the rotary inductive load or the load driving feeding circuit; and
a second switch group including a plurality of second switches which are connected to a positive terminal of the rotary inductive load or the load driving feeding circuit, and
wherein the control unit (121) closes any one of first switches and any one of second switches so as to form discharge lines from the plurality of electric rechargeable cells to the rotary inductive load or the load driving feeding circuit.

## Patentansprüche

1. Entladungssteuerungssystem für eine elektrische Batteriepackung (100), die mehrere in Reihe geschaltete wiederaufladbare elektrischen Zellen hat, wobei das System aufweist:
mehrere Zellenspannungserfassungseinheiten, die jeweilige Zellenspannungen der wiederaufladbaren elektrischen Zellen erfassen;
eine Schaltergruppe, die mehrere Schalter umfasst, die jeweils zwischen die mehreren wiederaufladbaren elektrischen Zellen geschaltet sind; und
eine Steuereinheit (121), die eine Entladungsleitung der Entladungsleitungen von wenigstens einer der wiederaufladbaren elektrischen Zellen zu einer rotierenden induktiven Last oder einer lasttreibenden Speiseschaltung bildet, wobei
die Steuereinheit (121) die Schalter der Schaltergruppe einzeln entsprechend den Erfassungsergebnissen durch die Zellenspannungserfassungseinheiten steuert, wenn eine Differenz zwischen einer höchsten Zellenspannung und
einer niedrigsten Zellenspannung in den wiederaufladbaren elektrischen Zellen der elektrischen Batteriepackung (100) gleich oder kleiner als ein vorgegebener Wert ist.

2. Entladungssteuerungssystem gemäß Anspruch 1, wobei
die wiederaufladbaren elektrischen Zellen wiederaufladbare elektrische Lithiumionenzellen aufweisen.

3. Entladungssteuerungssystem gemäß einem der vorhergehenden Ansprüche,
wobei
die Steuereinheit (121) die Schalter der Schaltergruppe einzeln derart steuert, dass die wiederaufladbaren elektrischen Zellen der elektrischen Batteriepackung (100) nacheinander zellenweise entladen werden.

4. Entladungssteuerungssystem gemäß einem der vorhergehenden Ansprüche,
wobei
die Steuereinheit (121) wenigstens eine der mehreren wiederaufladbaren elektrischen Zellen mit einer höheren Zellenspannung als dem mittleren Zellenspannungswert der wiederaufladbaren elektrischen Zellen der elektrischen Batteriepackung (100) spezifiziert und die Schalter der Schaltergruppe einzeln derart steuert, dass die wiederaufladbaren elektrischen Zellen nacheinander zellenweise von der spezifizierten wiederaufladbaren elektrischen Zelle entladen werden.

5. Entladungssteuerungssystem gemäß einem der vorhergehenden Ansprüche,
wobei
die Steuereinheit (121), wenn eine vorgegebene Zeitspanne seit dem Beginn der Entladung von einer wiederaufladbaren elektrischen Zelle verstreicht, eine Entladungsleitung von einer nächsten wiederaufladbaren elektrischen Zelle zu der rotierenden induktiven Last oder der lasttreibenden Speiseschaltung bildet.

6. Entladungssteuerungssystem gemäß einem der vorhergehenden Ansprüche,
wobei
die Steuereinheit (121), wenn die Zellenspannung einer wiederaufladbaren elektrischen Zelle als ein Ergebnis einer Entladung der wiederaufladbaren elektrischen Zelle um eine vorgegebene Spannung fällt, eine Entladungsleitung von einer nächsten wiederaufladbaren elektrischen Zelle zu der rotierenden induktiven Last oder der lasttreibenden Speiseschaltung bildet.

7. Entladungssteuerungssystem gemäß einem der vorhergehenden Ansprüche,
wobei
die Steuereinheit (121), wenn die Zellenspannung einer wiederaufladbaren elektrischen Zelle als ein Ergebnis einer Entladung der wiederaufladbaren elektrischen Zelle auf eine vorgegebene Spannung fällt, eine Entladungsleitung von einer nächsten wiederaufladbaren elektrischen Zelle zu der rotierenden induktiven Last oder der lasttreibenden Speiseschaltung bildet.

8. Entladungssteuerungssystem gemäß einem der vorhergehenden Ansprüche,
wobei
die Steuereinheit (121) die wiederaufladbaren elektrischen Zellen der elektrischen Batteriepackung (100) in mehrere Gruppen unterteilt, wobei jede die gleiche Anzahl wiederaufladbarer elektrischer Zellen enthält, und die Schalter der Schaltergruppe einzeln derart steuert, dass die mehreren Gruppen wiederaufladbarer elektrischer Zellen nacheinander gruppenweise entladen werden.

9. Entladungssteuerungssystem gemäß einem der vorhergehenden Ansprüche,
wobei
mehrere benachbarte wiederaufladbare elektrische Zellen als eine jeweilige Gruppe bildend bestimmt werden.

10. Entladungssteuerungssystem gemäß einem der vorhergehenden Ansprüche,
wobei
die Steuereinheit (121), wenn eine vorgegebene Zeitspanne seit dem Beginn der Entladung einer Gruppe verstreicht, eine Entladungsleitung von einer nächsten Gruppe zu der rotierenden induktiven Last oder der lasttreibenden Speiseschaltung bildet.

11. Entladungssteuerungssystem gemäß einem der vorhergehenden Ansprüche,
wobei
die Steuereinheit (121), wenn die Zellenspannung jeder der wiederaufladbaren elektrischen Zellen, die als eine Gruppe bildend bestimmt sind, als ein Ergebnis einer Entladung der Gruppe um eine vorgegebene Spannung fällt, eine Entladungsleitung von einer nächsten Gruppe zu der rotierenden induktiven Last oder der lasttreibenden Speiseschaltung bildet.

12. Entladungssteuerungssystem gemäß einem der vorhergehenden Ansprüche,
wobei
die Steuereinheit (121) die eine der mehreren wiederaufladbaren elektrischen Zellen mit der höchsten Zellenspannung in den mehreren wiederaufladbaren elektrischen Zellen der elektrischen Batteriepackung (100) als eine Gruppe bildend bestimmt und eine Entladungsleitung von der wiederaufladbaren elektrischen Zelle in der Gruppe zu der rotierenden induktiven Last oder der lasttreibenden Speiseschaltung bildet.

13. Entladungssteuerungssystem gemäß einem der vorhergehenden Ansprüche,
wobei
die Steuereinheit (121) die wiederaufladbare elektrische Zelle, die als die Gruppe bildend bestimmt werden soll, derart auswählt, dass eine Entladungsspannung der wiederaufladbaren elektrischen Zellen in einen Spannungsbereich fällt, der die rotierende induktive Last oder die lasttreibende Speiseschaltung antreiben kann.

14. Entladungssteuerungssystem gemäß einem der vorhergehenden Ansprüche,
wobei
die Steuereinheit (121) mehrere benachbarte wiederaufladbare elektrische Zellen als die Gruppe bildend bestimmt.

15. Entladungssteuerungssystem gemäß einem der vorhergehenden Ansprüche,
wobei
die Steuereinheit (121), wenn sie die mehreren wiederaufladbaren elektrischen Zellen als eine Gruppe bildend bestimmt, die wiederaufladbaren elektrischen Zellen in der Reihenfolge der wiederaufladbaren elektrischen Zellen mit einer höheren Zellenspannung bestimmt.

16. Entladungssteuerungssystem gemäß einem der vorhergehenden Ansprüche,
wobei
die Steuereinheit (121) eine Entladung der wiederaufladbaren elektrischen Zellen, die als die Gruppe bildend bestimmt ist, zu der rotierenden induktiven Last oder der lasttreibenden Speiseschaltung implementiert, bis eine Differenz zwischen einer niedrigsten Zellenspannung in den wiederaufladbaren elektrischen Zellen, die als die Gruppe bildend bestimmt sind, und einer höchsten Zellenspannung in den wiederaufladbaren elektrischen Zellen des elektrischen Batteriepakets (100) den vorgegebenen Wert übersteigt.

17. Entladungssteuerungssystem gemäß einem der vorhergehenden Ansprüche,
wobei
die Schaltergruppe hat:
eine erste Schaltergruppe, die mehrere erste Schalter umfasst, die mit einem negativen Eingangsanschluss der rotierenden induktiven Last oder der lasttreibenden Speiseschaltung verbunden sind; und
eine zweite Schaltergruppe, die mehrere zweite Schalter umfasst, die mit einem positiven Anschluss der rotierenden induktiven Last oder der lasttreibenden Speiseschaltung verbunden sind; und
wobei die Steuereinheit (121) einen beliebigen der ersten Schalter und einen beliebigen der zweiten Schalter schließt, um Entladungsleitungen von den mehreren wiederaufladbaren elektrischen Zellen zu der rotierenden induktiven Last oder der lasttreibenden Speiseschaltung zu bilden.

## Revendications

1. Système de commande de décharge pour un bloc de stockage électrique (100) qui comporte une pluralité de piles électriques rechargeables connectées en série, ledit système comprenant :
une pluralité d'unités de détection de tension de pile qui détectent les tensions de pile respectives des piles électriques rechargeables ;
un groupe de commutateurs comprenant une pluralité de commutateurs qui sont respectivement connectés entre la pluralité de piles électriques rechargeables ; et
une unité de commande (121) formant une ligne de décharge parmi les lignes de décharge d'au moins l'une quelconque des piles électriques rechargeables vers une charge inductive tournante ou un circuit d'alimentation de commande de charge, dans lequel
l'unité de commande (121) commande individuellement les commutateurs du groupe de commutateurs en fonction des résultats de détection des unités de détection de tension de pile lorsqu'une différence entre une tension de pile la plus élevée et une tension de pile la plus faible parmi les piles électriques rechargeables du bloc de stockage électrique (100) est égale ou inférieure à une valeur prédéterminée.

2. Système de commande de décharge selon la revendication 1, dans lequel
les piles électriques rechargeables comprennent des piles électriques rechargeables au lithium.

3. Système de commande de décharge selon l'une quelconque des revendications précédentes, dans lequel
l'unité de commande (121) commande individuellement les commutateurs du groupe de commutateurs de sorte que les piles électriques rechargeables du bloc de stockage électrique (100) soient déchargées séquentiellement pile par pile.

4. Système de commande de décharge selon l'une quelconque des revendications précédentes, dans lequel
l'unité de commande (121) spécifie au moins l'une de la pluralité des piles électriques rechargeables ayant une tension de pile supérieure à une valeur de tension de pile moyenne des piles électriques rechargeables du bloc de stockage électrique (100) et commande individuellement les commutateurs du groupe de commutateurs de sorte que les piles électriques rechargeables soient déchargées séquentiellement pile par pile à partir de la pile électrique rechargeable spécifiée.

5. Système de commande de décharge selon l'une quelconque des revendications précédentes, dans lequel
lorsqu'un intervalle de temps prédéterminé s'est écoulé depuis le début d'une décharge d'une pile électrique rechargeable, l'unité de commande (121) forme une ligne de décharge d'une pile électrique rechargeable suivante vers la charge inductive tournante ou le circuit d'alimentation de commande de charge.

6. Système de commande de décharge selon l'une quelconque des revendications précédentes, dans lequel
lorsque la tension de pile d'une pile électrique rechargeable chute d'une tension prédéterminée en conséquence d'une décharge de la pile électrique rechargeable, l'unité de commande (121) forme une ligne de décharge d'une pile électrique rechargeable suivante vers la charge inductive tournante ou le circuit d'alimentation de commande de charge.

7. Système de commande de décharge selon l'une quelconque des revendications précédentes, dans lequel
lorsque la tension de pile d'une pile électrique rechargeable chute à une tension prédéterminée en conséquence d'une décharge de la pile électrique rechargeable, l'unité de commande (121) forme une ligne de décharge d'une pile électrique rechargeable suivante vers la charge inductive tournante ou le circuit d'alimentation de commande de charge.

8. Système de commande de décharge selon l'une quelconque des revendications précédentes, dans lequel
l'unité de commande (121) divise les piles électriques rechargeables du bloc de stockage électrique (100) en une pluralité de groupes comprenant chacun le même nombre de piles électriques rechargeables et commande individuellement les commutateurs du groupe de commutateurs de sorte que la pluralité de groupes de piles électriques rechargeables soient déchargées séquentiellement groupe par groupe.

9. Système de commande de décharge selon l'une quelconque des revendications précédentes, dans lequel
une pluralité de piles électriques rechargeables adjacentes sont désignées comme formant chaque groupe.

10. Système de commande de décharge selon l'une quelconque des revendications précédentes, dans lequel
lorsqu'un intervalle de temps prédéterminé s'est écoulé depuis le début d'une décharge d'un groupe, l'unité de commande (121) forme une ligne de décharge d'un groupe suivant vers la charge inductive tournante ou le circuit d'alimentation de commande de charge.

11. Système de commande de décharge selon l'une quelconque des revendications précédentes, dans lequel
lorsque la tension de pile de chacune des piles électriques rechargeables désignées comme formant un groupe chute d'une tension prédéterminée en conséquence d'une décharge du groupe, l'unité de commande (121) forme une ligne de décharge d'un groupe suivant vers la charge inductive tournante ou le circuit d'alimentation de commande de charge.

12. Système de commande de décharge selon l'une quelconque des revendications précédentes, dans lequel
l'unité de commande (121) désigne la pile de la pluralité des piles électriques rechargeables ayant la tension de pile la plus élevée parmi la pluralité de piles électriques rechargeables du bloc de stockage électrique (100) comme formant un groupe et forme une ligne de décharge de la pile électrique rechargeable dans le groupe vers la charge inductive tournante ou le circuit d'alimentation de commande de charge.

13. Système de commande de décharge selon l'une quelconque des revendications précédentes, dans lequel
l'unité de commande (121) sélectionne la pile électrique rechargeable à désigner comme formant le groupe de sorte qu'une tension de décharge de la pile électrique rechargeable tombe dans une plage de tension qui peut commander la charge inductive tournante ou le circuit d'alimentation de commande de charge.

14. Système de commande de décharge selon l'une quelconque des revendications précédentes, dans lequel
l'unité de commande (121) désigne une pluralité de piles électriques rechargeables adjacentes comme formant le groupe.

15. Système de commande de décharge selon l'une quelconque des revendications précédentes, dans lequel
lors de la désignation de la pluralité de piles électriques rechargeables comme formant un groupe, l'unité de commande (121) désigne les piles électriques rechargeables dans l'ordre de la pile électrique rechargeable ayant une tension de pile plus élevée.

16. Système de commande de décharge selon l'une quelconque des revendications précédentes, dans lequel
l'unité de commande (121) met en oeuvre une décharge des piles électriques rechargeables désignées comme formant le groupe vers la charge inductive tournante ou le circuit d'alimentation de commande de charge jusqu'à ce qu'une différence entre une tension de pile la plus faible parmi les piles électriques rechargeables désignées comme formant le groupe et une tension de pile la plus élevée parmi les piles électriques rechargeables du bloc de stockage électrique (100) dépasse la valeur prédéterminée.

17. Système de commande de décharge selon l'une quelconque des revendications précédentes, dans lequel
le groupe de commutateurs comporte :
un premier groupe de commutateurs comprenant une pluralité de premiers commutateurs qui sont connectés à une borne d'entrée côté négatif de la charge inductive tournante ou du circuit d'alimentation de commande de charge ; et
un deuxième groupe de commutateurs comprenant une pluralité de deuxièmes commutateurs qui sont connectés à une borne positive de la charge inductive tournante ou du circuit d'alimentation de commande de charge, et
dans lequel l'unité de commande (121) ferme l'un quelconque des premiers commutateurs et l'un quelconque des deuxièmes commutateurs de manière à former des lignes de décharge de la pluralité de piles électriques rechargeables vers la charge inductive tournante ou le circuit d'alimentation de commande de charge.
